# EUROPEAN PATENT APPLICATION

(11) **EP 1 245 894 A1**
(43) Date of publication of application: **02.10.2002**
(21) Application number: 02076122.7
(22) Date of filing: 21.03.2002
(51) Int. Cl.: F16L 37/30

(54) **Dividable valve**

(30) Priority: 26.03.2001 NL 1017696
(71) Applicant: Solid Processing Systems Holding B.V., 7722 RS Dalfsen (NL)
(72) Inventor: Wolters, Laurentius Gerardus Johannes, 7131 GL Lichtenvoorde (NL)
(74) Representative: 't Jong, Bastiaan Jacobus

(57) **Abstract**

The invention relates to an assembly (1) for closing two openings, for instance of two containers (2,3), for coupling the openings and for placing the openings into communication, which assembly (1) comprises:
- a first valve part (7) for arranging on the first opening;
- a second valve part (8) for arranging on the second opening;
- coupling means (13,16) for coupling the two openings;
- first locking means (19) for locking the first valve part (7) in a closed position while in the uncoupled state;
- second locking means (23) for locking the second valve part (8) in a closed position while in the uncoupled state; and
- third locking means (26) for locking at least one of the valve parts (7,8) and for releasing the at least one valve part (7,8) in the coupled state, in order to place the openings into mutual communication.

## Description

The invention relates to an assembly for closing two openings, for instance of two containers, for coupling the openings and for placing the openings into communication.

In for instance the drug industry substances are used which are extremely dangerous. When exposed to such substances the size of a particle a person can develop very serious disease symptoms or even die. It is however necessary to weigh these substances out of a storage container and transfer them to another container.

So-called dividable valves are commercially available for this purpose. These dividable valves consist of two valve parts, wherein one valve part is arranged on the storage container and wherein the other valve part is arranged on for instance a transport container. When this very hazardous material must be transferred from the one container to the other container, the valve parts are then placed against each other and coupled. A thus formed valve can subsequently be opened and the material can be transferred from the one container to the other container. The valve is then closed again and divided again. Thus is prevented that any material can enter the environment.

When the valve parts are uncoupled from each other it must then be ensured that the valve parts cannot be opened accidentally. In addition, it is required that the valve parts can only be opened when a proper coupling has been effected between the two valve parts. This is essential, particularly when one or both containers are pressurized.

It is an object of the present invention to provide a dividable valve which meets at least the above stated requirements.

This object is achieved with an assembly as according to the preamble, which assembly comprises:
- a first valve part for arranging on the first opening;
- a second valve part for arranging on the second opening;
- coupling means for coupling the two openings;
- first locking means for locking the first valve part in a closed position while in the uncoupled state;
- second locking means for locking the second valve part in a closed position while in the uncoupled state; and
- third locking means for locking at least one of the valve parts and for releasing the at least one valve part in the coupled state, in order to place the openings into mutual communication.

The different locking means ensure that the valve parts cannot be accidentally opened while in the uncoupled state, and that the valve parts can only be opened when they are situated in a correctly coupled state.

In an embodiment of the assembly according to the invention at least one of the valve parts comprises a control shaft for opening the valve parts in the coupled position. In coupled state the valve parts are mutually abutting, so that by operating only one valve part the other valve part is co-displaced.

In a preferred embodiment of the invention the control shaft comprises a locking surface on which the third locking means engage in the uncoupled position. This prevents the possibility of the valve being operated when the valve parts are not properly coupled to each other.

In another preferred embodiment according to the invention the coupling means comprise a bayonet fitting, comprising a ring arranged on one of the valve parts and protrusions arranged on the other of the valve parts and co-acting with the ring. With a bayonet fitting a coupling is obtained which acts along the periphery of the valve parts and can only be carried into a coupled or uncoupled position by a single rotation of the bayonet ring.

In the uncoupled state the ring preferably lies against the locking surface and in the coupled state it releases the locking surface. This ensures that the control shaft can be rotated only when a proper coupling of the valve parts has been realized. Without this coupling the control shaft will be blocked by the ring of the bayonet fitting and the valve cannot therefore be opened accidentally.

The bayonet fitting can further comprise at least three protrusions. With at least three protrusions a proper distribution of the coupling forces over the valve parts is obtained. Particularly when high pressures prevail in the containers, at least three protrusions are then desirable so as to prevent deformation of the valve parts.

In yet another preferred embodiment of the assembly according to the invention, at least one of the first and second locking means comprises a locking pin displaceable between a locking and unlocking position and acting on a shaft of the relevant valve part. Hereby is ensured that when the valve parts are uncoupled from each other the valves cannot be opened accidentally, for instance by exerting a force on the valve part.

At least one of the first and second valve parts preferably comprises an unlocking pin for placing in unlocked position the locking pin of the other valve part. The locking action of the first and second locking means can hereby be released by placing the two valve parts onto each other. The valve can be operated when the third locking means are now unlocked by correctly coupling the two valve parts.

In yet another embodiment of the assembly according to the invention each valve part comprises a tiltable valve plate for opening or closing the valve part, wherein the valve plates each comprise a protruding peripheral edge, which peripheral edges are mutually abutting in the coupled state. Particularly at high pressures the valve plate could bend slightly. In order to prevent a space being created, as a result of bending, along the periphery of the valve formed from two valve parts, in which space material could then accumulate, the peripheral edge is arranged so that they can always lie against each other under any circumstances.

These and other features of the invention are further elucidated with reference to the annexed drawings.

Figure 1 is a perspective view of an assembly according to the invention.

Figure 2 shows a perspective bottom view of the assembly according to figure 1 in the uncoupled state.

Figure 3 shows in perspective view a cross-section of the assembly according to figure 1, wherein the valve parts have been placed a short distance apart.

Figure 4 shows in perspective view a cross-section of the situation in which the two valve parts are placed against each other.

Figure 5 shows a detail of figure 4.

Figure 6 shows a detail of the assembly of figure 1 in the fully coupled and unlocked situation.

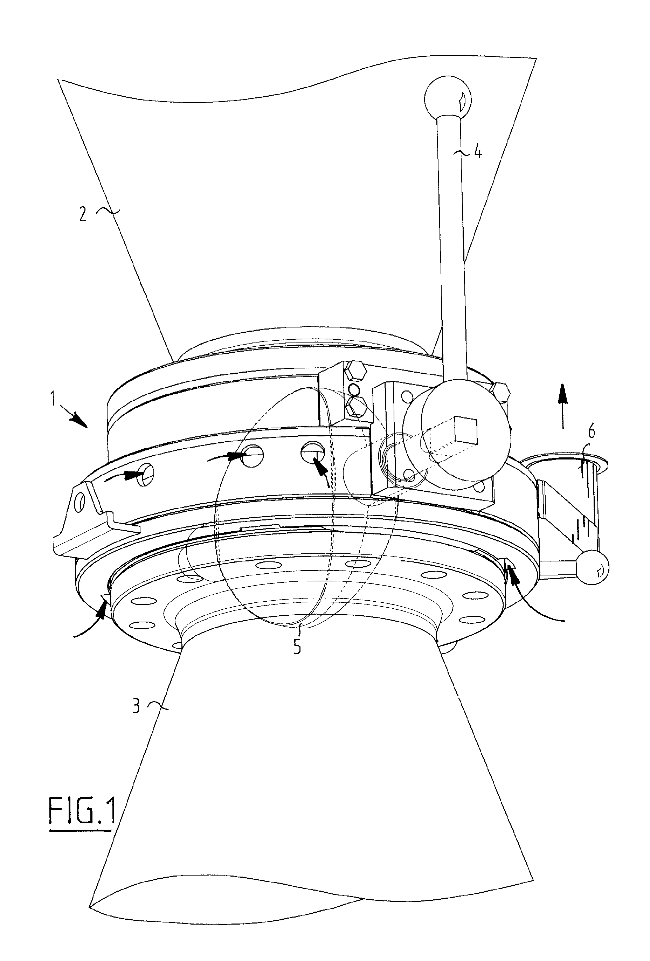

Figure 1 shows an assembly 1 according to the invention. This assembly 1 is connected on the top side to a first container 2 and on the underside to a second container 3. Assembly 1 has a control lever 4 with which a valve 5 can be operated. A suction opening 6 is further arranged on assembly 1 so that air can be drawn through assembly 1 via diverse openings in order to extract contaminants.

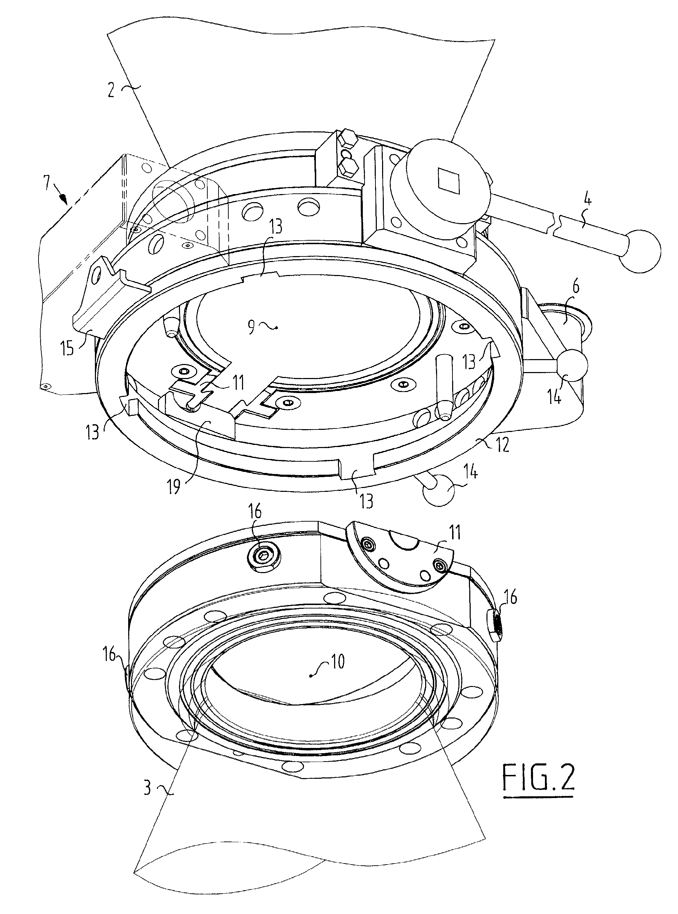

Figure 2 shows assembly 1 according to figure 1 in perspective bottom view in the uncoupled state. Assembly 1 comprises an upper valve part 7 which is mounted on first container 2, and a lower valve part 8 which is mounted on second container 3. Each valve part 7, 8 has a valve plate 9, 10 arranged on a bearing mounted shaft. These valve plates 9, 10 are mounted in bearings 11.

The upper valve part 7 has a rotatable bayonet ring 12 in which a number of recesses 13 are arranged. This bayonet ring can be operated manually by means of handles 14 or optionally pneumatically by means of a cylinder which acts on bracket 15.

The lower valve part 8 is provided along the periphery with a number of protrusions 16. When upper valve part 7 is coupled to lower valve part 8 these protrusions 16 pass through the recesses 13 and can be enclosed behind this ring by rotating bayonet ring 12, so that valve parts 7, 8 are mutually coupled.

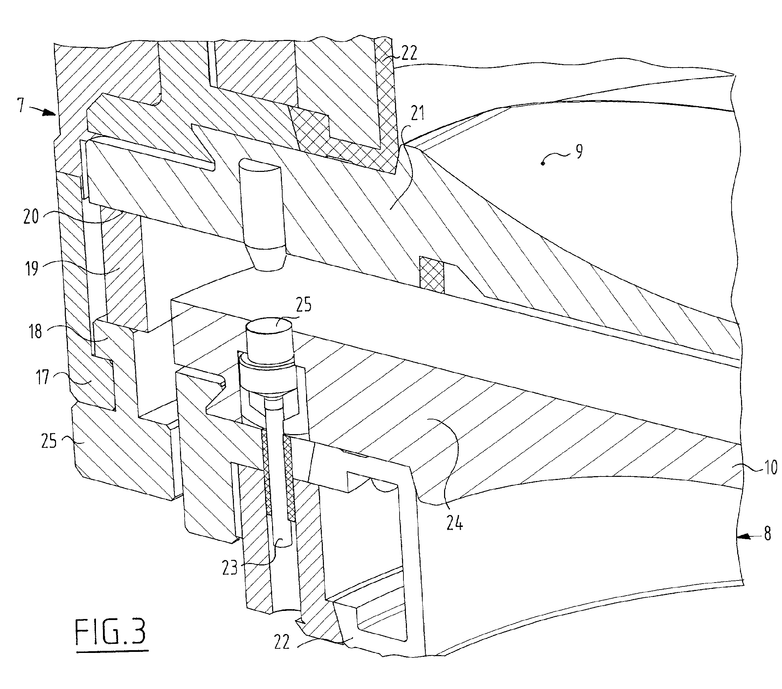

In figure 3 is shown a detail of assembly 1, wherein upper valve part 7 and lower valve part 8 have been placed a short distance apart. It can be clearly seen that bayonet ring 12 is enclosed in upper valve part 7 by means of an edge 17 arranged in valve part 7 and an edge 18 arranged on a bayonet ring. A locking part 19 is placed on bayonet ring 12 (see also figure 2). In the position shown in figure 3 this locking part 19 lies against a locking surface 20 of shaft 21 of valve plate 9. Because this locking part 19 lies against locking surface 20 of shaft 21, the possibility is prevented of valve plate 9 accidentally being rotated from the closed position into the opened position.

Valve plate 9 and valve plate 10 are sealed relative to the other parts of upper valve part 7 respectively lower valve part 8 by means of seals 22.

A resilient locking pin 23 is arranged in lower valve part 8. This locking pin protrudes into a cavity arranged in shaft 24 of valve plate 10. A plunger part 25 is further arranged in this cavity. Because in this situation the locking pin 23 protrudes into shaft 24, valve plate 10 is also prevented from being accidentally opened in this situation. A similar construction is also arranged in shaft 21, but then on the other side of the valve plate.

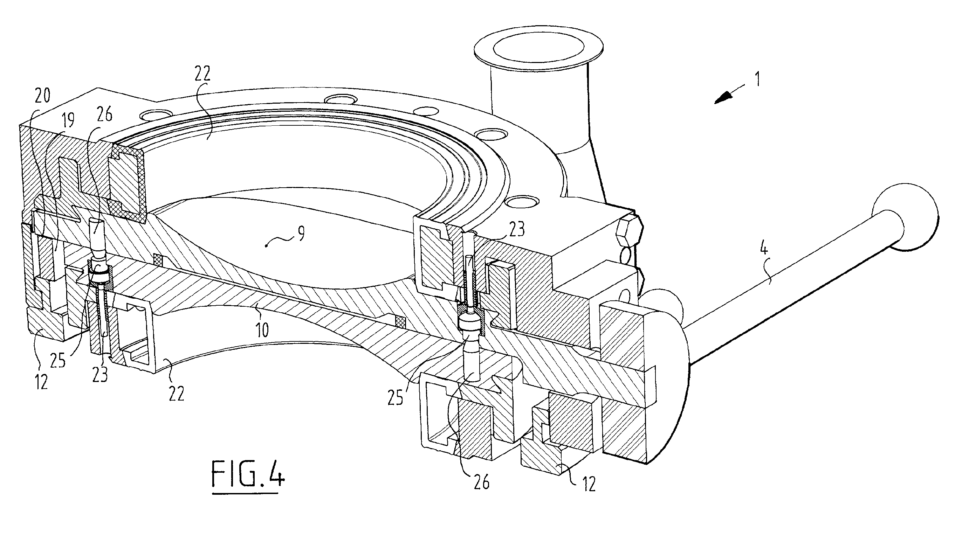

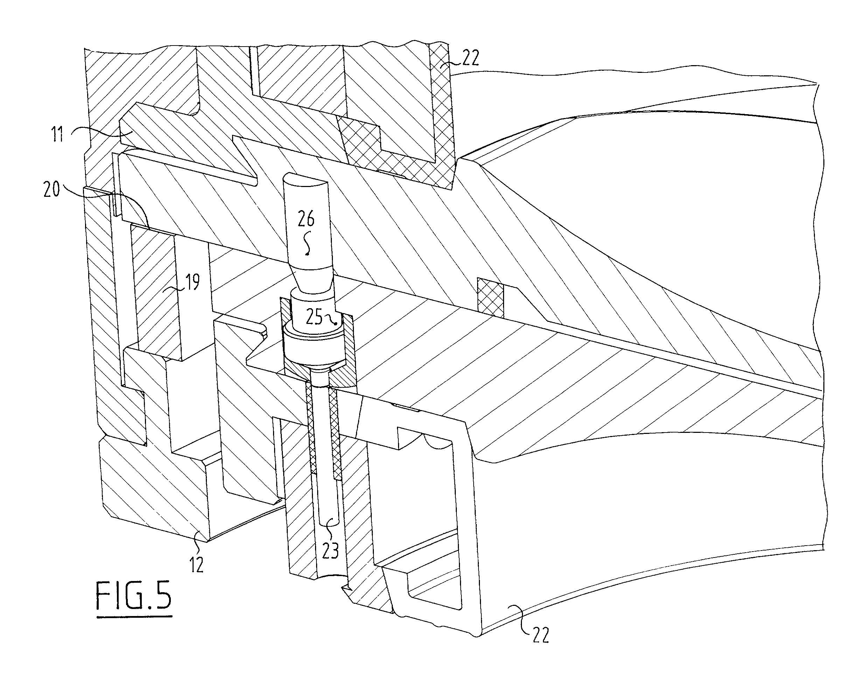

In figure 4 a cross-section of assembly 1 according to the invention is shown in perspective view, wherein valve parts 7, 8 are placed onto each other. Opposite plunger parts 25 there are arranged in the opposite shaft unlocking pins 26 (see also figure 5) which ensure that locking pins 23 no longer block the shafts. The bayonet ring is however still in a position such that locking part 19 still lies against locking surface 20, whereby valve plates 9 and 10 can still not be operated by control lever 4.

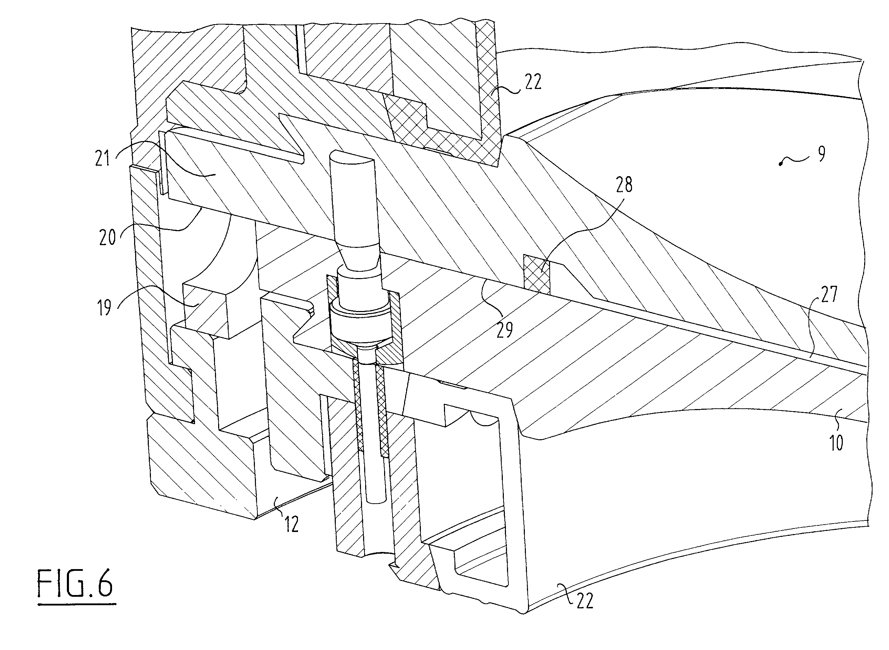

Figure 6 once again shows a detail of assembly 1 according to the invention. This detail corresponds for the most part with the detail according to figure 5. The only difference is that the bayonet ring has been rotated so that locking part 19 is displaced such that a recess arranged therein is situated below the locking surface 20 of shaft 21 of the valve plate. Owing to this rotation of bayonet ring 12, the upper valve part 7 and lower valve part 8 are mutually coupled by means of recesses 13 and protrusions 16 (see figure 2). Shaft 21 can moreover now be rotated by means of control lever 4 so that valve plates 9, 10 can be placed in the position as shown in figure 1.

In order to uncouple the two valve parts the above described sequence is reversed.

Valve plate 9 has a central recessed part 27 in which a sealing ring 28 is placed. This ensures that in the case of possible bending of valve plate 9 or 10 the peripheral edges 29 of the two valve plates remain lying against each other, so that contamination cannot accumulate between the two valve plates 9, 10.

## Claims

1. Assembly for closing two openings, for instance of two containers, for coupling the openings and for placing the openings into communication, which assembly comprises:
- a first valve part for arranging on the first opening;
- a second valve part for arranging on the second opening;
- coupling means for coupling the two openings;
- first locking means for locking the first valve part in a closed position while in the uncoupled state;
- second locking means for locking the second valve part in a closed position while in the uncoupled state; and
- third locking means for locking at least one of the valve parts and for releasing the at least one valve part in the coupled state, in order to place the openings into mutual communication.

2. Assembly as claimed in claim 1, wherein at least one of the valve parts comprises a control shaft for opening the valve parts in the coupled position.

3. Assembly as claimed in claim 2, wherein the control shaft comprises a locking surface on which the third locking means engage in the uncoupled position.

4. Assembly as claimed in any of the foregoing claims, wherein the coupling means comprise a bayonet fitting, comprising a ring arranged on one of the valve parts and protrusions arranged on the other of the valve parts and co-acting with the ring.

5. Assembly as claimed in claims 3 and 4, wherein in the uncoupled state the ring lies against the locking surface and in the coupled state it releases the locking surface.

6. Assembly as claimed in claim 4 or 5, wherein the bayonet fitting comprises at least three protrusions.

7. Assembly as claimed in any of the foregoing claims, wherein at least one of the first and second locking means comprises a locking pin displaceable between a locked and an unlocked position and acting on a shaft of the relevant valve part.

8. Assembly as claimed in claim 7, wherein at least one of the first and second valve parts comprises an unlocking pin for placing in unlocked position the locking pin of the other valve part.

9. Assembly as claimed in any of the foregoing claims, wherein each valve part comprises a tiltable valve plate for opening or closing the valve part, wherein the valve plates each comprise a protruding peripheral edge, which peripheral edges are mutually abutting in the coupled state.
